# EUROPÄISCHE PATENTANMELDUNG

(11) **EP 1 188 952 A2**
(43) Veröffentlichungstag der Anmeldung: **20.03.2002**
(21) Anmeldenummer: 01122220.5
(22) Anmeldetag: 17.09.2001
(51) Int. Cl.: F16G 3/00

(54) **Verschlussteil für ein Verschlussband**

(30) Priorität: 15.09.2000 DE 10045766; 18.10.2000 DE 10051634
(71) Anmelder: Geimuplast Kunststofftechnik GmbH, 82490 Farchant (DE)
(72) Erfinder: Ahlgren, Ove, 461 91 Trollhättan (SE); Lechner, Josef, 82467 Garmisch-Partenkirchen (DE)
(74) Vertreter: Zinnecker, Armin, Dipl.-Ing.

(57) **Zusammenfassung**

Ein Verschlußteil für ein Verschlußband umfaßt einen Zahnriemen (32) und einen Verschlußteil (1) mit einer Führung für den Zahnriemen (32). Um eine einfache Lösung der Verriegelung zwischen Zahnriemen und Verschlußteil zu ermöglichen weist der Verschlußteil (1) einen Eingreifteil (6, 7) mit einem Zahn und einen Entriegelungsteil (16, 17) auf, durch welchen der Zahn außer Eingriff bringbar ist (Fig. 6).

## Beschreibung

Die Erfindung' betrifft ein Verschlußteil für ein Verschlußband, das einen Zahnriemen und einen Verschlußteil mit einer Führung für den Zahnriemen umfaßt. Das Verschlußteil und/oder der Zahnriemen sind vorzugsweise aus Kunststoff hergestellt. Der Zahnriemen umfaßt mindestens eine Zahnreihe. Er ist in der Führung des Verschlußteils derart geführt, daß die Zahnreihe an einem Zahn des Verschlußteiles vorbeigeführt wird. Dabei können die Zähne der Zahnreihe und/oder der Zahn des Verschlußteils derart ausgestaltet sein, daß eine Relativbewegung der Zahnreihe gegenüber dem Zahn in einer Richtung, nämlich der Schließrichtung, möglich ist, während diese Relativbewegung in der anderen Richtung (Öffnungsrichtung) durch eine Verhakung des Zahnes des Verschußteils mit einem Zahn der Zahnreihe gesperrt ist. Zu diesem Zweck können die Zähne der Zahnreihe und/oder der Zahn des Verschlußteils asymmetrisch ausgestaltet sein, beispielsweise in Form eines dreieckförmigen Querschnitts mit einer schrägen Flanke und einer im wesentlichen senkrechten, möglicherweise auch hinterschnittenen Flanke.

Aufgabe der Erfindung ist es, einen Verschlußteil für ein Verschlußband der eingangs angegebenen Art vorzugschlagen, dessen Verriegelung auf einfache Weise lösbar ist.

Erfindungsgemäß wird diese Aufgabe durch die Merkmale des Anspruchs 1 gelöst. Der Verschlußteil weist einen Eingreifteil auf, an dem der Zahn vorgesehen ist, und einen Entriegelungsteil, durch welchen der Zahn außer Eingriff bringbar ist. Durch eine Betätigung des Entriegelungsteils wird der Zahn von der Zahnreihe des Zahnriemens wegbewegt und außer Eingriff gebracht, wodurch die Verriegelung des Verschlußbandes gelöst werden kann.

Vorteilhafte Weiterbildungen sind in den Unteransprüchen beschrieben.

Vorzugsweise ist der Eingreifteil mit dem Verschlußteil durch ein Gelenk verbunden. Dieses Gelenk kann dadurch geschaffen werden, daß der Eingreifteil an dem Verschlußteil angeformt ist. Erforderlichenfalls kann im Bereich der Anformung eine Materialaussparung vorgesehen sein. Die Anformung ist vorzugsweise derart gestaltet bzw. dimensioniert, daß der Eingreifteil nach einer Verformung bzw. Betätigung wieder in seine Ausgangslage zurückkehrt. Das Gelenk ist also vorzugsweise als elastisches Gelenk ausgestaltet.

Eine weitere vorteilhafte Weiterbildung ist dadurch gekennzeichnet, daß der Entriegelungsteil mit dem Verschlußteil durch ein Gelenk verbunden ist. Dieses Gelenk ist vorzugsweise in ähnlicher oder gleicher Weise ausgestaltet wie das Gelenk, durch das der Eingreifteil mit dem Verschlußteil verbunden ist, so daß auf die dortige Beschreibung verwiesen werden kann. Insbesondere handelt es sich vorzugsweise um ein elastisches Gelenk.

Vorzugsweise ist der Eingreifteil durch einen Druck auf den Entriegelungsteil betätigbar. Der Zahn des Eingreifteils ist also vorzugsweise durch Ausübung eines Druckes auf den Entriegelungsteil außer Eingriff bringbar. Hierdurch wird die Entriegelung vereinfacht.

Nach einer weiteren vorteilhaften Weiterbildung ist auf der Seite des Verschlußteils, die dem Eingreifteil gegenüberliegt, ein weiteres, vorzugsweise entsprechendes Eingreifteil vorgesehen. Ferner ist auf der Seite des Verschlußteils, die dem Entriegelungsteil gegenüberliegt, vorzugsweise ein weiteres, vorzugsweise entsprechendes Entriegelungsteil vorgesehen. Vorteilhaft ist es, wenn der Verschlußteil hinsichtlich des Eingreifteils und/oder des Entriegelungsteils symmetrisch ausgestaltet ist.

Eine weitere vorteilhafte Weiterbildung ist dadurch gekennzeichnet, daß die auf gegenüberliegenden Seiten des Verschlußteils vorgesehenen Eingreifteile durch einen aufeinander zu gerichteten Druck auf die Entriegelungsteile betätigbar sind. Hierdurch wird die Entriegelung erheblich erleichtert.

Die Zähne der Eingreifteile können in dieselbe Richtung weisen. Es ist allerdings auch möglich, daß die Zähne der Eingreifteile voneinander weg weisen. Auch andere Anordnungen sind denkbar.

Nach einer weiteren vorteilhaften Weiterbildung weist der Eingreifteil eine Schrägfläche auf. Der Entriegelungsteil weist eine entsprechende Keilfläche auf. Durch das Zusammenwirken der Keilfläche mit der Schrägfläche kann der Eingreifteil betätigt und dadurch der Zahn des Eingreifteils außer Eingriff gebracht werden.

Vorteilhaft ist es, wenn die Schrägfläche neben dem Zahn liegt.

Auf der gegenüberliegenden Seite des Verschlußteils ist vorzugsweise ein entsprechender Eingreifteil mit einer entsprechenden Schrägfläche vorgesehen. Die Zähne der Eingreifteile weisen vorzugsweise in dieselbe Richtung. Die Schrägflächen weisen vorzugsweise voneinander weg.

Nach einer weiteren vorteilhaften Weiterbildung ist der Eingreifteil mit dem Entriegelungsteil durch ein Verbindungsteil verbunden. Bei einer Betätigung des Entriegelungsteils wird der Eingreifteil durch Vermittlung des Verbindungsteils betätigt.

Vorzugsweise ist auf der gegenüberliegenden Seite des Verschlußteils ein entsprechender Eingreifteil vorgesehen. Die Zähne der Eingreifteile weisen vorzugsweise voneinander weg.

Die Erfindung betrifft ferner ein Verschlußband, das einen Verschlußteil und einen Zahnriemen umfaßt oder aus einem Verschlußteil und einem Zahnriemen besteht.

Gemäß der Erfindung weist dieses Verschlußband einen erfindungsgemäßen Verschlußteil auf.

Ausführungsbeispiele der Erfindung werden nachstehend anhand der beigefügten Zeichnung im einzelnen erläutert. In der Zeichnung zeigt
- Fig. 1: eine erste Ausführungsform eines Verschlußteils für ein Verschlußband in einer Ansicht von vorne,
- Fig. 2: den Verschlußteil gemäß Fig. 1 in einer Seitenansicht,
- Fig. 3: einen Schnitt längs der Linie III-III in Fig. 1,
- Fig. 4: den zu dem Verschlußteil gemäß Fig. 1 bis 3 gehörenden Zahnriemen in einer Ansicht von vorne,
- Fig. 5: den Zahnriemen gemäß Fig. 4 in einer Seitenansicht,
- Fig. 6: das Verschlußband, bestehend aus einem Verschlußteil nach den Figuren 1 bis 3 und einem Zahnriemen nach den Figuren 4 und 5, im zusammengesetzten Zustand,
- Fig. 7: einen Schnitt längs der Linie VII-VII in Fig. 6,
- Fig. 8: das Verschlußband gemäß den Figuren 6 und 7 in einer Stellung beim Einsetzen des Zahnriemens in den Verschlußteil in einer Ansicht von vorne,
- Fig. 9: das Verschlußband gemäß Fig. 8 in einer Seitenansicht,
- Fig. 10: das Verschlußband gemäß Figuren 8 und 9 nach dem teilweisen Spannen in einer Ansicht von vorne,
- Fig. 11: eine zweite Ausführungsform eines Verschlußteils in einer Ansicht von vorne,
- Fig. 12: den Verschlußteil gemäß Fig. 11 in einer Seitenansicht,
- Fig. 13: einen Schnitt längs der Linie XIII-XIII in Fig. 11,
- Fig. 14: einen Schnitt längs der Linie XIV-XIV in Fig. 11,
- Fig. 15: die Einzelheit "A" aus Fig. 14 in einer vergrößerten Darstellung,
- Fig. 16: den zu dem Verschlußteil gemäß Figuren 11 bis 15 gehörenden Zahnriemen in einer Ansicht von vorne,
- Fig. 17: den Zahnriemen gemäß Fig. 16 in einer Seitenansicht,
- Fig. 18: einen Schnitt längs der Linie XVIII-XVIII in Fig. 16,
- Fig. 19: die Einzelheit "B" aus Fig. 16 in einer vergrößerten Darstellung,
- Fig. 20: die Einzelheit "C" aus Fig. 18 in einer vergrößerten Darstellung,
- Fig. 21: den Zahnriemen gemäß Figuren 16 und 17 von der Rückseite her gesehen,
- Fig. 22: die Einzelheit "D" aus Fig. 21 in einer vergrößerten Darstellung,
- Fig. 23: das Verschlußband , bestehend aus dem Verschlußteil nach den Figuren 11 bis 15 und dem Zahnriemen nach den Figuren 16 bis 22, im zusammengesetzten Zustand in einer Darstellung von vorne,
- Fig. 24: das Verschlußband gemäß Fig. 23 in einer Seitenansicht und
- Fig. 25: einen Querschnitt durch das Verschlußband gemäß Figuren 23 und 24 im Bereich des Verschlußteils.

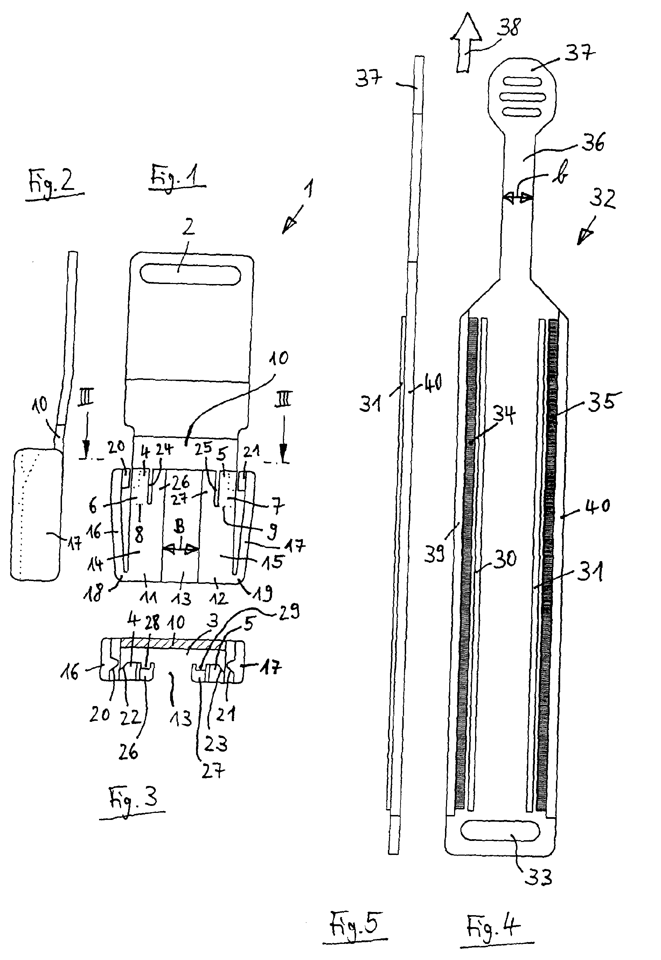

Bei der in den Figuren 1 bis 10 gezeigten ersten Ausführungsform ist an einem Ende des Verschlußteils 1, das in den Figuren 1 bis 3 dargestellt ist, ein Durchbruch 2 vorgesehen, durch den ein Befestigungsband (in der Zeichnung nicht dargestellt) hindurchgezogen und an dem Verschlußteil 1 befestigt werden kann. Der Verschlußteil 1 ist an seinem anderen Ende mit einer Führung 3 für den Zahnriemen versehen. In die Führung 3 ragt ein erster Zahn 4 und ein zweiter Zahn 5 hinein, die voneinander beabstandet sind und die in dieselbe Richtung weisen. Die Zähne 4 und 5 befinden sich im äußeren Bereich der Führung 3. Sie sind im Endbereich von jeweils einem Eingreifteil 6, 7 angeordnet. Die Eingreifteile 6, 7 sind durch jeweils ein Gelenk 8, 9 mit dem Verschlußteil 1 verbunden, nämlich ein elastisches Gelenk, das durch eine Anformung des jeweiligen Eingreifteils 6, 7 an dem Verschlußteil 1 gebildet wird. Nach einer elastischen Auslenkung der Enden der Eingreifteile 6, 7, an denen sich die Zähne 4, 5 befinden, nehmen die Eingreifteile 6, 7 wieder ihre ursprüngliche Lage ein.

Wie aus den Figuren 1 bis 3 ersichtlich weist der Verschlußteil 1 eine Grundplatte 10 auf. An dem dem Durchbruch 2 gegenüberliegenden Ende des Verschlußteils 1 bzw. der Grundplatte 10 sind zwei Endwände 11, 12 vorhanden, die zwischen sich eine Lücke 13 freilassen. Die Endwände 11, 12 sind mit Verlängerungen 14, 15 verbunden, die zu dem anderen Ende des Verschlußteils 1 hin gerichtet sind und an deren Enden sich die Eingreifteile 6, 7 mit den Zähnen 4, 5 befinden. Auch die Verlängerungen 14, 15 lassen zwischen sich die Lücke 13 frei.

Die Endwände 11, 12 sind in ihren Außenbereichen mit Entriegelungsteilen 16, 17 verbunden. Die Entriegelungsteile 16, 17 sind mit dem Verschlußteil 1 im äußeren Endbereich der Endwände 11, 12 durch jeweils ein Gelenk 18, 19 verbunden, wobei diese Gelenke 18, 19 dadurch gebildet sind, daß die Entriegelungsteile 16, 17 an dem Verschlußteil 1 im äußeren Endbereich der Endwände 11, 12 angeformt sind.

Die Entriegelungsteile 16, 17 verlaufen parallel zur Längsrichtung des Verschlußteils 1 bzw. der Grundplatte 10. Sie liegen einander gegenüber und sind - ebenso wie die Eingreifteile 6, 7 mit den Zähnen 4, 5 - symmetrisch zueinander ausgestaltet. An dem dem Durchbruch 2 zugewandten Ende der Entriegelungsteile 16, 17 sind nach innen weisende Keilflächen 20, 21 vorgesehen, die in der in den Figuren 1 bis 3 gezeigten Ausgangsstellung von entsprechenden Schrägflächen 22, 23 neben den Zähnen 4, 5 beabstandet sind, wie insbesondere aus den Figuren 1 und 3 ersichtlich.

An den dem Durchbruch 2 zugewandten Enden weisen die Verlängerungen 14, 15 jeweils einen in Längsrichtung des Verschlußteils 1 verlaufenden Schlitz 24, 25 auf, durch den die Eingreifteile 6, 7 von Führungsabschnitten 26, 27 abgeteilt werden. Die inneren Ränder der Führungsabschnitte 26, 27 weisen in der aus Fig. 3 ersichtlichen Weise nach innen in die Führung 3, wodurch Aufnahmen 28, 29 für Führungserhebungen 30, 31 des Zahnriemens 32 gebildet werden.

Der in den Figuren 4 und 5 dargestellte Zahnriemen 32 ist an einem Ende mit einem Durchbruch 33 versehen, der zur Aufnahme und Befestigung eines Riemens oder Bandes (in der Zeichnung nicht dargestellt) dient. Er weist zwei parallele Zahnreihen 34, 35 auf, deren Abstand voneinander dem Abstand der Zähne 4, 5 des Verschlußteils 1 entspricht. In gleicher Weise entspricht der Abstand der parallel zueinander und innerhalb der Zahnreihen 34, 35 verlaufenden Führungserhebungen 30, 31 dem Abstand der Aufnahmen 28, 29 des Verschlußteils 1.

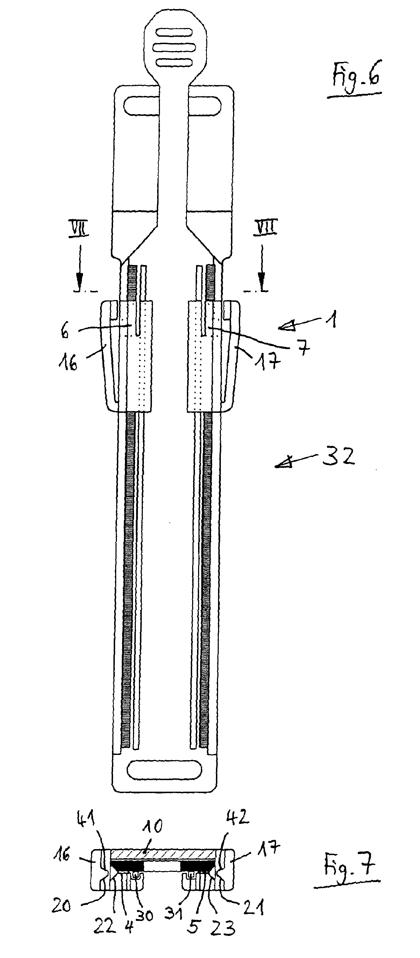

Der Zahnriemen 32 weist an seinem dem Durchbruch 33 gegenüberliegenden Ende einen Einführteil 36 auf, an den sich eine Grifflasche 37 anschließt. Die Breite b des Einführteils 36 ist geringer als die Breite B der Lücke 13 des Verschlußteils 1. Die Länge des Einführteils 36 ist größer als die Länge der Lücke 13. Hierdurch ist gewährleistet, daß der Einführteil 36 durch die Lücke 13 hindurch in den Verschlußteil 1 eingelegt werden kann, wie in Fig. 8 dargestellt. Anschließend kann an der Grifflasche 37 in Richtung des Pfeils 38 gezogen werden, wodurch die Zähne der Zahnreihen 34, 35 mit den Zähnen 4, 5 des Verschlußteils 1 in Eingriff gelangen, wie in Fig. 6, 7 und 10 gezeigt. Während dieser Bewegung wird der Zahnriemen 32 durch die Führungserhebungen 30, 31 in den Aufnahmen 28, 29 geführt.

Die Zähne der Zahnreihen 34, 35 sind asymmetrisch ausgestaltet. Die Flanken der Zähne, die dem mit dem Durchbruch 33 versehenen Ende zugewandt sind, verlaufen im wesentlichen senkrecht zur Grundfläche des Zahnriemens 32, während die zur anderen Seite hin gerichteten Flanken schräg verlaufen. Die Zähne 4, 5 des Verschlußteils 1 sind in entsprechender Weise ausgestaltet. Hierdurch kann der Zahnriemen 32 in Richtung des Pfeils 38 durch die Führung 3 des Verschlußteils 1 hindurchgezogen werden. Beim Vorbeigang eines Zahnes der Zahnreihen 34, 35 werden die Eingreifteile 6, 7 jeweils elastisch ausgelenkt. Wenn nach der Beendigung der Bewegung in Richtung des Pfeils 38 versucht wird, den Zahnriemen 32 in die entgegengesetzte Richtung zu bewegen, verhaken die Zähne 4, 5 des Verschlußteils 1 mit einem der Zähne 34, 35 des Zahnriemens 32.

Um diese Verhakung zu lösen werden die Entriegelungsteile 16, 17 zusammengedrückt. Hierdurch bewegen sich die Keilflächen 20, 21 aufeinander zu. Sobald die Keilfächen 20, 21 die Schrägflächen 22, 23 der Zähne 4, 5 erreichen, beginnen diese eine Bewegung nach unten, also von der Ebene der Grundplatte 10 weg. Diese Bewegung wird durch die Elastizität der Eingreifteile 6, 7 bzw. durch deren elastische Gelenke 8, 9 ermöglicht. Wenn die Zähne 4, 5 um ein ausreichendes Ausmaß von der Grundplatte 10 des Verschlußteils 1 weg bewegt worden sind, wird die Verhakung zwischen den Zähnen 4, 5 und den Zähnen der Zahnreihen 34, 35 freigegeben, und der Zahnriemen 32 kann entgegen der Richtung des Pfeils 38 aus der Führung 3 herausgezogen werden.

An dem Zahnriemen 32 sind außerhalb der Zahnreihen 34, 35 Schrägflächen 39, 40 vorgesehen, die entsprechenden schrägen Flächen 41, 42 der Entriegelungsteile 16, 17 entsprechen.

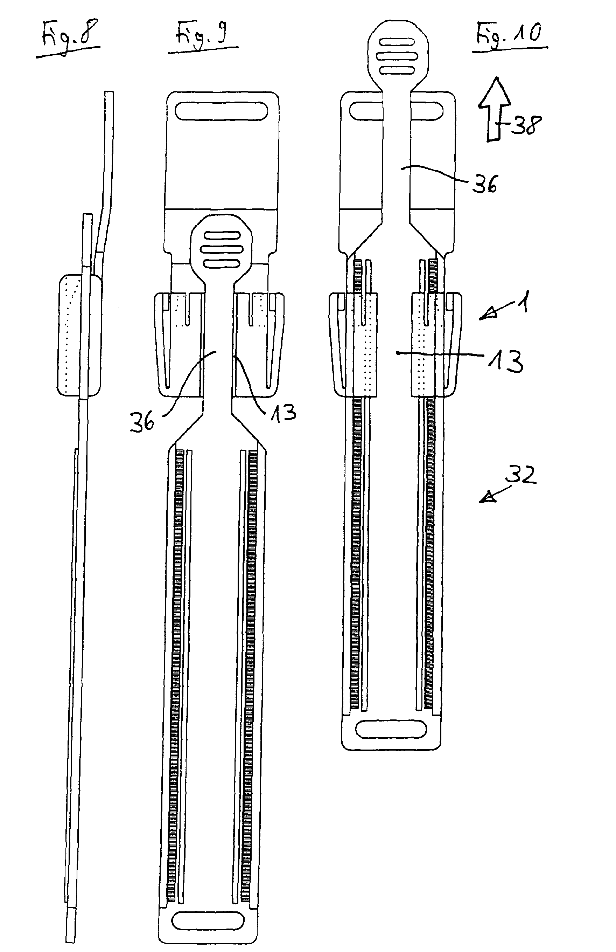

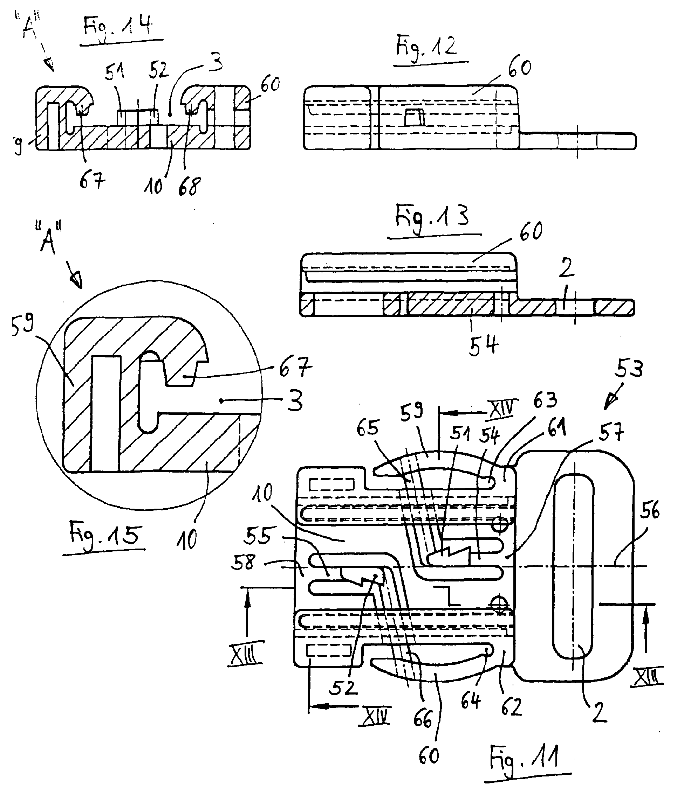

Die Figuren 11 bis 25 zeigen eine zweite Ausführungsform. Diejenigen Teile, die der ersten Ausführungsform entsprechen, sind mit denselben Bezugszeichen versehen. Bei dieser Ausführungsform sind die Zähne 51, 52 in der Mitte der Führung 3 des Verschlußteils 53 angeordnet. Sie befinden sich an den Enden der Eingreifteile 54, 55, die in Längsrichtung 56 des Verschlußteils 53 verlaufen und die an das Eingreifteil 53 unter Bildung elastischer Gelenke 57, 58 angeformt sind.

Die Eingreifteile 54, 55 mit den Zähnen 51, 52 liegen in Längsrichtung 56 des Verschlußteils 53 hintereinander. Die Zähne 51, 52 weisen voneinander weg. Sie besitzen in der aus Fig. 11 ersichtlichen Weise eine erste Flanke, die im wesentlichen senkrecht zur Längsrichtung 56 verläuft und durch die die Verhakung bewirkt wird, und eine geneigt zur Längsrichtung 56 verlaufende Flanke. Die Zähne 51, 52 ragen in der aus Fig. 14 ersichtlichen Weise von der Grundplatte 10 in das Innere der Führung 3.

An den Seiten des Verschlußteils sind zwei Entriegelungsteile 59, 60 angeordnet, die durch elastische Gelenke 61, 62 mit dem Verschlußteil 53 verbunden sind. Die elastischen Gelenke 61, 62 werden durch Anformungen an den Verschlußteil 53 gebildet. Ferner sind Materialaussparungen 63, 64 zur Verbesserung der Gelenkfunktion vorgesehen. Die Entriegelungsteile 59, 60 sind symmetrisch zur Längsachse 56 des Verschlußteils 1. Sie weisen eine jeweils nach außen gerichtete Krümmung auf.

Die Entriegelungsteile 59, 60 sind in ihrem vorderen Endbereich mit Verbindungsteilen 65, 66 verbunden, deren jeweiliges andere Ende mit dem jeweils zugehörigen Führungsteil 54, 55 verbunden ist, und zwar im Bereich der Zähne 51, 52. Die Zähne 51, 52 sind in Fig. 11 in der Verriegelungsstellung gezeigt. Wenn die Verriegelung gelöst werden soll, werden die Entriegelungsteile 59 60 zusammengedrückt, so daß sie sich aufeinander zu bewegen. Durch Vermittlung der Verbindungsteile 65, 66 werden dadurch die Eingreifteile 54, 55 und mit ihnen die Zähne 51, 52 jeweils in Richtung auf die Mittenachse 56 zu bewegt. Der Abstand der Zähne von der Mittenachse 56 verringert sich, so daß die Verriegelung gelöst wird.

Im Bereich der Enden der Führung 3 sind Führungserhebungen 67, 68 vorhanden, die parallel zueinander und parallel zur Längsachse 56 verlaufen und die voneinander beabstandet sind. Die Führungserhebungen 67, 68 ragen in die Führung 3 hinein. Sie befinden sich zu beiden Seiten der Zähne 51, 52.

Der zu dem Verschlußteil nach den Figuren 11 bis 15 gehörende Zahnriemen 69 ist in den Figuren 16 bis 22 dargestellt. Er besitzt zwei Zahnreihen 70, 71, die parallel zur Längsachse 72 verlaufen und jeweils nach innen gerichtet sind, also aufeinander zu gerichtet sind. Die Zahnreihen 70, 71 befinden sich zu beiden Seiten einer in der Mitte des Zahnriemens 69 verlaufenden Längsnut 73.

Auf der Rückseite des Zahnriemens 69 ist im Bereich der Zahnreihen 70, 71 eine Erhebung 74 vorgesehen. Zu beiden Seiten der Erhebung 74 befindet sich, ebenfalls auf der Rückseite des Zahnriemens 69, jeweils eine Längsnut 75, 76. Die Längsnuten 75, 76 entsprechen den Führungserhebungen 67, 68 im Verschlußteil 53 sowohl in ihrer Profilform als auch in ihrem Abstand.

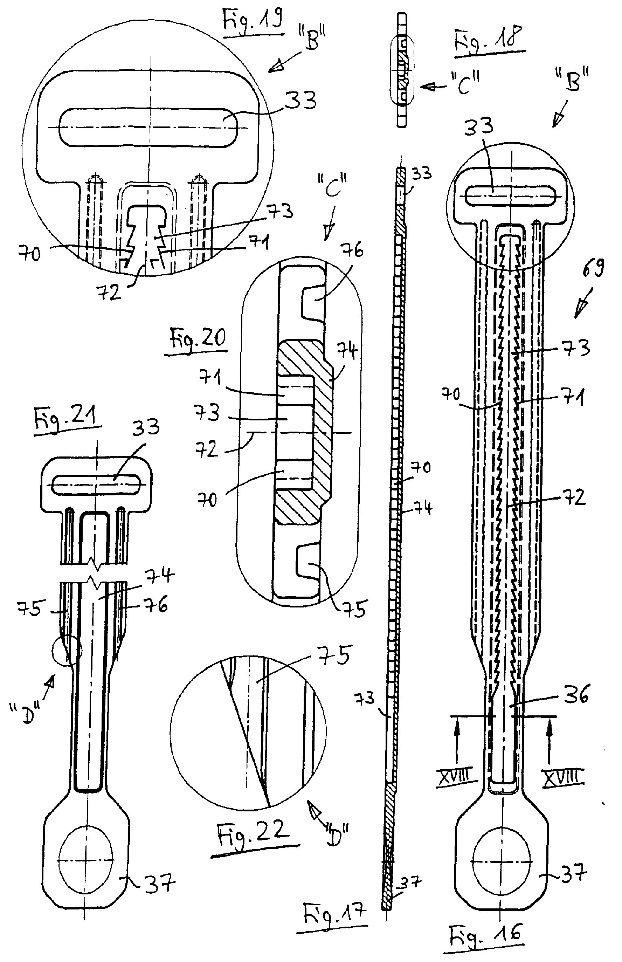

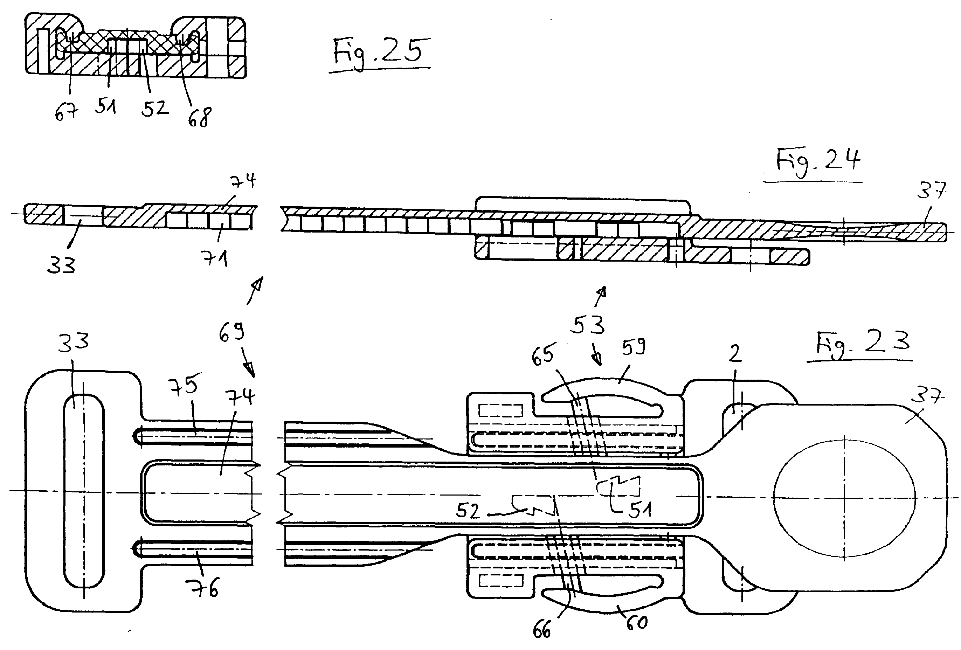

Zur Herstellung der Verbindung zwischen den Zahnriemen 69 und dem Verschlußteil 53 wird der Zahnriemen 69 mit seinem Einführteil 36 in die Lücke zwischen den Führungserhebungen 67, 68 eingelegt, wie in Fig. 23 dargestellt. Durch eine anschließende Relativbewegung zwischen Zahnriemen 69 und Verschlußteil 53 wird die Verhakung zwischen den Zähnen 51, 52 und jeweils einem der Zähne der Zahnreihen 70, 71 hergestellt. Die Flanken der Zähne der Zahnreihen 70, 71 sind in einer den Zähnen 51, 52 entsprechenden Weise jeweils abwechselnd im wesentlichen senkrecht zur Längsachse 72 des Zahnriemens 69 gerichtet sowie in einer Richtung schräg zu dieser Längsachse 72. Während der genannten Relativbewegung wird der Zahnriemen 69 in der Führung 3 des Verschlußteils 53 durch die Führungserhebungen 67, 68, die in die Längsnuten 75, 76 in der aus Fig. 25 ersichtlichen Weise eingreifen, geführt.

## Patentansprüche

1. Verschlußteil für ein Verschlußband, das einen Zahnriemen (32; 69) und einen Verschlußteil (1; 53) mit einer Führung (3) für den Zahnriemen (32; 69) umfaßt, wobei der Verschlußteil (1; 53) einen Eingreifteil (6, 7: 54, 55) mit einem Zahn (4, 5; 51, 52) und einen Entriegelungsteil (16, 17; 59, 60), durch welchen der Zahn (4, 5; 51, 52) außer Eingriff bringbar ist, aufweist.

2. Verschlußteil nach Anspruch 1, **dadurch gekennzeichnet, daß** der Eingreifteil (6, 7; 54, 55) mit dem Verschlußteil (1; 53) durch ein-Gelenk (8, 9; 57, 58) verbunden ist.

3. Verschlußteil nach Anspruch 1 oder 2, **dadurch gekennzeichnet, daß** der Entriegelungsteil (16, 17; 59, 60) mit dem Verschlußteil (1; 53) durch ein Gelenk (18, 19; 61, 62) verbunden ist.

4. Verschlußteil nach einem der vorhergehenden Ansprüche, **dadurch gekennzeichnet, daß** der Eingreifteil (6, 7; 54, 55) durch einen Druck auf den Entriegelungsteil (16, 17; 59, 60) betätigbar ist.

5. Verschlußteil nach einem der vorhergehenden Ansprüche, **dadurch gekennzeichnet, daß** auf der Seite des Verschlußteils (1; 53), die dem Eingreifteil (6) und/oder dem Entriegelungsteil (16; 59) gegenüberliegt, ein entsprechender Eingreifteil (7) und/oder ein entsprechendre Entriegelungsteil (17; 60) vorgesehen ist.

6. Verschlußteil nach Anspruch 5, **dadurch gekennzeichnet, daß** die Eingreifteile (6, 7; 54, 55) durch einen aufeinander zu gerichteten Druck auf die Entriegelungsteile (16, 17; 59, 60) betätigbar sind.

7. Verschlußteil nach einem der vorhergehenden Ansprüche, **dadurch gekennzeichnet, daß** der Eingreifteil (6, 7) eine Schrägfläche (22, 23) aufweist und daß der Entriegelungsteil (16, 17) eine entsprechende Keilfläche (20, 21) aufweist.

8. Verschlußteil nach Anspruch 7, **dadurch gekennzeichnet, daß** die Schrägfläche (22, 23) neben dem Zahn (4, 5) liegt.

9. Verschlußteil nach Anspruch 7 oder 8, **dadurch gekennzeichnet, daß** auf der Seite des Verschlußteils (1), die dem Eingreifteil (6) gegenüberliegt, ein entsprechender Eingreifteil (7) mit einer entsprechenden Schrägfläche nach einem der Ansprüche 9 oder 10 vorgesehen ist.

10. Verschlußteil nach Anspruch 9, **dadurch gekennzeichnet, daß** die Zähne (4, 5) der Eingreifteile (6, 7) in dieselbe Richtung weisen.

11. Verschlußteil nach Anspruch 9 oder 10, **dadurch gekennzeichnet, daß** die Schrägflächen (22, 23) voneinander weg weisen.

12. Verschlußband, **gekennzeichnet durch** einen Zahnriemen (32; 69) und einen Verschlußteil (1; 53) nach einem der vorhergehenden Ansprüche.
